# EUROPÄISCHE PATENTSCHRIFT

(11) **EP 2 962 383 B1**
(45) Veröffentlichungstag und Bekanntmachung des Hinweises auf die Patenterteilung: **19.07.2017**
(21) Anmeldenummer: 14718534.2
(22) Anmeldetag: 03.04.2014
(51) Int. Cl.: H02K 21/24, H02K 1/18, H02K 1/14

(54) **AXIALFLUSSMASCHINE IN LEICHTBAUWEISE**
AXIAL FLUX MACHINE HAVING A LIGHTWEIGHT DESIGN
MACHINE À FLUX AXIAL LÉGÈRE

(30) Priorität: 12.04.2013 DE 102013206593
(43) Veröffentlichungstag der Anmeldung: 06.01.2016
(73) Patentinhaber: Siemens Aktiengesellschaft, 80333 München (DE)
(72) Erfinder: KÖHLER, Marco, 91217 Hersbruck (DE); PETERMAIER, Korbinian, 80799 München (DE); SCHRAMM, Marco, 90409 Nürnberg (DE)
(86) Internationale Anmeldenummer: PCT/EP2014/056712
(87) Internationale Veröffentlichungsnummer: WO 2014/166811

(56) Entgegenhaltungen:
- WO-A1-96/09680
- WO-A1-03/094328
- WO-A1-2010/092402
- DE-A1- 10 140 362
- GB-A- 2 468 019
- JP-A- 2010 246 171
- US-A1- 2003 057 796
- US-A1- 2006 043 821
- US-A1- 2008 278 019
- US-A1- 2011 316 381
- WOOLMER T J ET AL: "Analysis of the Yokeless And Segmented Armature Machine", ELECTRIC MACHINES&DRIVES CONFERENCE, 2007. IEMDC '07. IEEE INTERNATIONAL, IEEE, PISCATAWAY, NJ, USA, 1. Mai 2007 (2007-05-01), Seiten 704-708, XP031114922, ISBN: 978-1-4244-0742-2 in der Anmeldung erwähnt

## Beschreibung

Die vorliegende Erfindung betrifft eine elektrische Axialflussmaschine,
- wobei die Axialflussmaschine eine um eine Rotationsachse rotierbare Rotorwelle aufweist, auf der zwei Rotoren angeordnet sind, die in Richtung der Rotationsachse gesehen voneinander beabstandet sind,
- wobei in Richtung der Rotationsachse gesehen zwischen den beiden Rotoren ein Stator angeordnet ist,
- wobei der Stator eine Anzahl von Statorzähnen aufweist, die sich jeweils in Richtung der Rotationsachse zwischen zwei Endbereichen erstrecken,
- wobei die Statorzähne in einem radialen Abstand von der Rotationsachse gleichmäßig um die Rotationsachse herum verteilt angeordnet sind und ein Statorwicklungssystem tragen.

Eine derartige Axialflussmaschine ist beispielsweise aus dem Fachaufsatz "Analysis of the Yokeless and Segmented Armature machine" von T.J. Woolmer und M.D. McCulloch bekannt.

Desweiteren beschreibt bspw. auch die GB2468019A eine derartige Axialflussmaschine, bei der zudem die Statorzähne mit Hilfe spezielle Strukturen miteinander und mit einem den Stator umgebenden Gehäuse verbunden sind.

Elektrische Axialflussmaschinen sind in verschiedenen Ausgestaltungen bekannt. So sind beispielsweise Axialflussmaschinen bekannt, welche ein einziges Läuferaktivteil und ein einziges Ständeraktivteil aufweisen. Weiterhin sind Axialflussmaschinen bekannt, die zwei Ständeraktivteile und ein einziges Läuferaktivteil oder umgekehrt zwei Läuferaktivteile und ein einziges Ständeraktivteil aufweisen.

Bei Axialflussmaschinen, die zwei Läuferaktivteile und ein einziges Ständeraktivteil aufweisen, ist es möglich, die Axialflussmaschine ohne Ständerjoch auszubilden. In diesem Fall sind im Stand der Technik die Wicklungen des Statorwicklungssystems als Einzelwicklungen ausgebildet, die jeweils auf einen Spulenträger gewickelt sind. Die Spulenträger sind in sich mechanisch stabile Elemente. Sie bestehen in der Regel aus Kunststoff. Die Spulenträger sind jeweils auf einen Statorzahn aufgesteckt. Die Statorzähne werden am Umfang verteilt angeordnet.

Axialflussmaschinen bieten das Potenzial, bei relativ kleiner und leichter Bauweise ein relativ hohes Drehmoment und eine relativ hohe Nennleistung zur Verfügung zu stellen. Sie werden daher beispielsweise als kompakte Traktionsantriebe bei Fahrzeugen eingesetzt. Im eingangs genannten Stand der Technik ist beispielsweise beabsichtigt, die dort beschriebene Axialflussmaschine als Antrieb für ein Kraftfahrzeug zu verwenden.

Die Aufgabe der vorliegenden Erfindung besteht darin, eine Axialflussmaschine der eingangs genannten Art derart weiterzuentwickeln, dass unter Beibehaltung der relativ leichten Bauweise auf einfache Weise eine mechanische Fixierung der Statorzähne relativ zueinander und eine mechanische Fixierung des Stators insgesamt in einem den Stator radial außen umgebenden Gehäuse möglich ist.

Die Aufgabe wird durch eine Axialflussmaschine mit den Merkmalen des Anspruchs 1 gelöst. Vorteilhafte Ausgestaltungen der erfindungsgemäßen Axialflussmaschine sind Gegenstand der abhängigen Ansprüche 2 bis 14.

Erfindungsgemäß wird eine Axialflussmaschine der eingangs genannten Art dadurch ausgestaltet, dass die Statorzähne in den Endbereichen über eine jeweilige Ringstruktur miteinander und mit einem den Stator radial außen umgebenden Gehäuse verbunden sind. Die Ringstrukturen bilden eine leichte und dennoch stabile Verbindung der genannten Komponenten untereinander aus. Dabei bestehen die Ringstrukturen radial zur Rotationsachse gesehen aus einem radial inneren Innenring und einem radial äußeren Außenring, wobei die Ringstrukturen in den Innenring und den Außenring unterteilt sind. Dies kann fertigungstechnische Vorteile aufweisen.

Das Statorwicklungssystem weist Wicklungen auf. Es ist im Rahmen der erfindungsgemäßen Axialflussmaschine - ebenso wie im Stand der Technik - möglich, dass die Wicklungen auf Spulenträger gewickelt sind, die ihrerseits auf die Statorzähne aufgesteckt sind. Vorzugsweise ist das Statorwicklungssystem jedoch direkt auf die Statorzähne gewickelt. Die Spulenträger, die zum einen (wenn auch nur relativ geringfügig) zum Gewicht der Axialflussmaschine beitragen und zum anderen (und dies meist in nennenswertem Umfang) Bauvolumen beanspruchen, können also entfallen.

Es ist - ebenso wie im Stand der Technik - möglich, dass das Statorwicklungssystem aus Einzelwicklungen besteht, die jeweils auf einen einzelnen Statorzahn gewickelt sind. Aufgrund der direkten Bewicklung der Statorzähne mit dem Statorwicklungssystem ist es jedoch alternativ ebenso möglich, dass das Statorwicklungssystem als verteiltes Wicklungssystem ausgebildet ist. Ein verteiltes Wicklungssystem weist elektromagnetische Vorteile gegenüber einem aus Einzelwicklungen bestehenden Wicklungssystem auf. Dies gilt insbesondere im Falle einer sogenannten Zweischichtwicklung.

Die Ringstrukturen können aus einem magnetisch leitfähigen Material bestehen, beispielsweise aus Stahl oder anderen Eisenlegierungen. Vorzugsweise bestehen die Ringstrukturen jedoch zur Vermeidung von Wirbelströmen aus einem elektrisch nicht leitfähigen Material. Weiterhin bestehen sie zur Vermeidung unerwünschter Einflüsse auf das elektromagnetische Verhalten der Axialflussmaschine vorzugsweise aus einem magnetisch nicht leitfähigen Material. Insbesondere können die Ringstrukturen aus einem faserverstärkten Kunststoff bestehen. Beispiele derartiger Kunststoffe sind CFK (= kohlefaserverstärkte Kunststoffe) oder GFK (= glasfaserverstärkte Kunststoffe).

Es ist möglich, dass die Ringstrukturen in Massivbauweise ausgebildet sind. Vorzugsweise jedoch sind die Ringstrukturen in Sandwichbauweise ausgebildet. Dies führt zu besonders leichten und dennoch mechanisch stabilen Ringstrukturen.

Es ist möglich, dass die Ringstrukturen tangential um die Rotationsachse herum gesehen als geschlossene Ringe ausgebildet sind. Diese Ausgestaltung ist besonders einfach realisierbar. Alternativ können die Ringstrukturen aus einer Anzahl von Ringsegmenten bestehen. Diese Ausgestaltung kann fertigungstechnische Vorteile bieten.

Es ist möglich, dass in Richtung der Rotationsachse gesehen die Ringstrukturen zwischen den Statorzähnen einerseits und den Rotoren andererseits angeordnet sind. Diese Gestaltung ist besonders einfach. Alternativ ist es möglich, dass die Statorzähne zwischen die Ringstrukturen hineinragen oder die Statorzähne über die Ringstrukturen hinausragen. Diese Gestaltungen führen zu einer besonders kompakten Bauweise der Axialflussmaschine.

In einer besonders bevorzugten Ausgestaltung weisen die Statorzähne in den Endbereichen Stege auf, so dass die Statorzähne in den Endbereichen um die Rotationsachse herum gesehen einen größeren Winkel überdecken als zwischen den Endbereichen. Diese Ausgestaltung kann zum einen montagetechnisch vorteilhaft sein, zum anderen beim Betrieb der Axialflussmaschine vorteilhaft sein.

Die Verbindung der Statorzähne mit den Ringstrukturen kann nach Bedarf ausgebildet sein. Insbesondere können die Statorzähne und die Ringstrukturen formschlüssig, kraftschlüssig, stoffschlüssig oder lösbar miteinander verbunden sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine Axialflussmaschine,
- FIG 2: einen Querschnitt durch einen Stator einer Axialflussmaschine,
- FIG 3: ein Detail einer Ringstruktur,
- FIG 4: eine perspektivische Darstellung eines Stators,
- FIG 5: eine Axialflussmaschine in abgerollter Darstellung,
- FIG 6: eine perspektivische Darstellung eines weiteren Stators,
- FIG 7: einen Ausschnitt von FIG 6,
- FIG 8: eine weitere perspektivische Darstellung eines Stators und
- FIG 9: einen Ausschnitt von FIG 8.

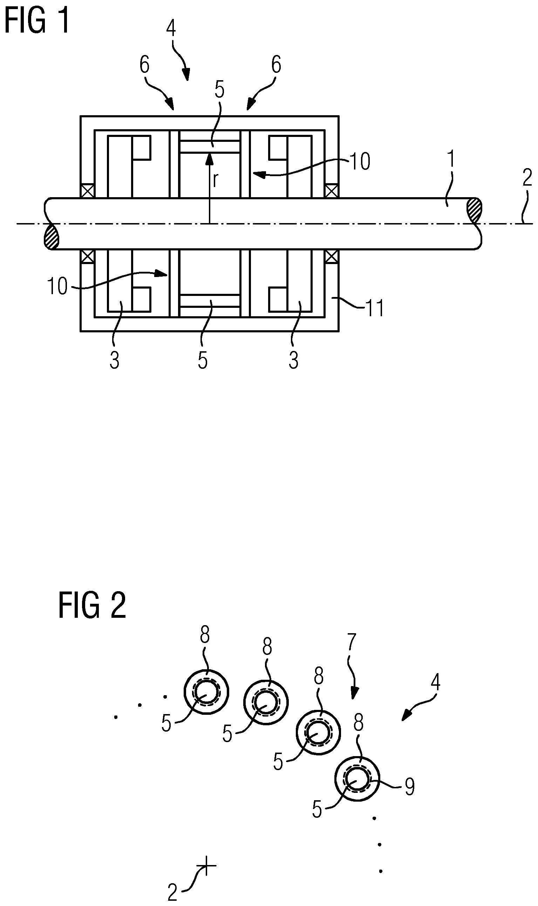

Gemäß FIG 1 weist eine elektrische Axialflussmaschine eine Rotorwelle 1 auf. Die Rotorwelle 1 ist um eine Rotationsachse 2 rotierbar. Auf der Rotorwelle 1 sind zwei Rotoren 3 angeordnet. Die Rotoren 3 weisen in Axialrichtung (d.h. parallel zur Rotationsachse 2 gesehen) einen Abstand voneinander auf, sind also voneinander beabstandet. Zwischen den Rotoren 3 ist in Axialrichtung gesehen ein Stator 4 angeordnet. Die Rotoren 3 weisen üblicherweise Permanentmagnete und magnetisch leitfähige Joche auf.

Der Stator 4 weist gemäß FIG 2 eine Anzahl von Statorzähnen 5 auf. Die Statorzähne 5 können beispielsweise aus laminiertem Dynamoblech (SiFe, CoFe, ...) bestehen. Alternativ können sie beispielsweise aus SMC-Materialien (SMC = soft magnetic composites) gepresst oder aus magnetisch leitfähigen Pulverwerkstoffen gesintert sein. Die Statorzähne 5 erstrecken sich in Axialrichtung gemäß FIG 1 zwischen zwei Endbereichen 6. Als Endbereiche 6 gelten im Zweifelsfalle die jeweils axial äußersten 10 % der Statorzähne 5 oder weniger, vorzugsweise die jeweils axial äußersten 5 % der Statorzähne 5 oder weniger. Die Statorzähne 5 sind in einem Radialabstand r von der Rotationsachse 2 angeordnet. Sie sind in Tangentialrichtung (d.h. um die Rotationsachse 2 herum) gesehen gleichmäßig verteilt angeordnet. Die Statorzähne 5 tragen ein in FIG 2 schematisch angedeutetes Statorwicklungssystem 7. Das Statorwicklungssystem 7 ist vorzugsweise direkt auf die Statorzähne 5 gewickelt. Es ist zwar möglich, dass zwischen den Statorzähnen 5 und den Wicklungen 8 eine Isolierschicht 9 vorhanden ist, beispielsweise eine Isolierschicht 9 aus Papier. Eine in sich mechanisch stabile Tragstruktur (d.h. ein Spulenträger) ist vorzugsweise jedoch nicht vorhanden.

Die Statorzähne 5 sind in den Endbereichen 6 über eine jeweilige Ringstruktur 10 miteinander verbunden. Die Statorzähne 5 sind über die Ringstrukturen 10 weiterhin mit einem Gehäuse 11 verbunden, welches den Stator 4 radial außen umgibt. Die Verbindung der Ringstrukturen 10 mit dem Gehäuse 11 kann nach Bedarf ausgebildet sein. Beispielsweise kann das Gehäuse 11 auf die Ringstrukturen 10 aufgeschrumpft sein. Alternativ kann ein Formschluss bestehen. Beispielsweise können die Ringstrukturen 10 radial außen Ausnehmungen aufweisen (beispielsweise U-förmige Nuten), in welche korrespondierende Vorsprünge des Gehäuses 11 eingreifen. Alternativ sind auch andere Verbindungsarten möglich. Beispielsweise können die Ringstrukturen 10 mit dem Gehäuse 11 verschraubt oder verklebt sein.

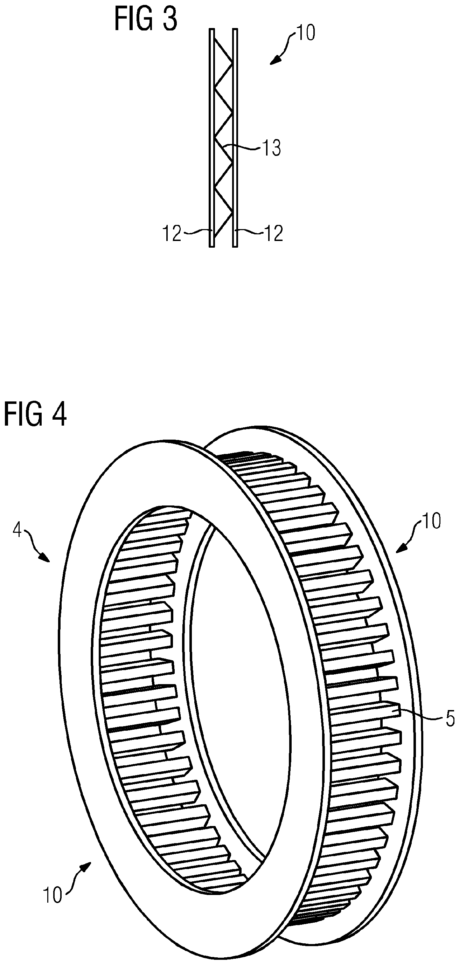

Die Ringstrukturen 10 bestehen vorzugsweise aus einem elektrisch nicht leitenden und/oder magnetisch nicht leitenden Material. Das Material sollte weiterhin möglichst leicht sein. Beispielsweise können die Ringstrukturen 10 aus einem faserverstärkten Kunststoff bestehen, insbesondere aus CFK oder GFK. Zur möglichst weitgehenden Verringerung des Eigengewichts der Ringstrukturen 10 können die Ringstrukturen 10 gemäß FIG 3 in Sandwichbauweise ausgebildet sein. In diesem Fall weisen die Ringstrukturen 10 gemäß FIG 3 mehrere Schichten 12 auf, die über eine fachwerkähnliche Struktur 13 miteinander verbunden sind.

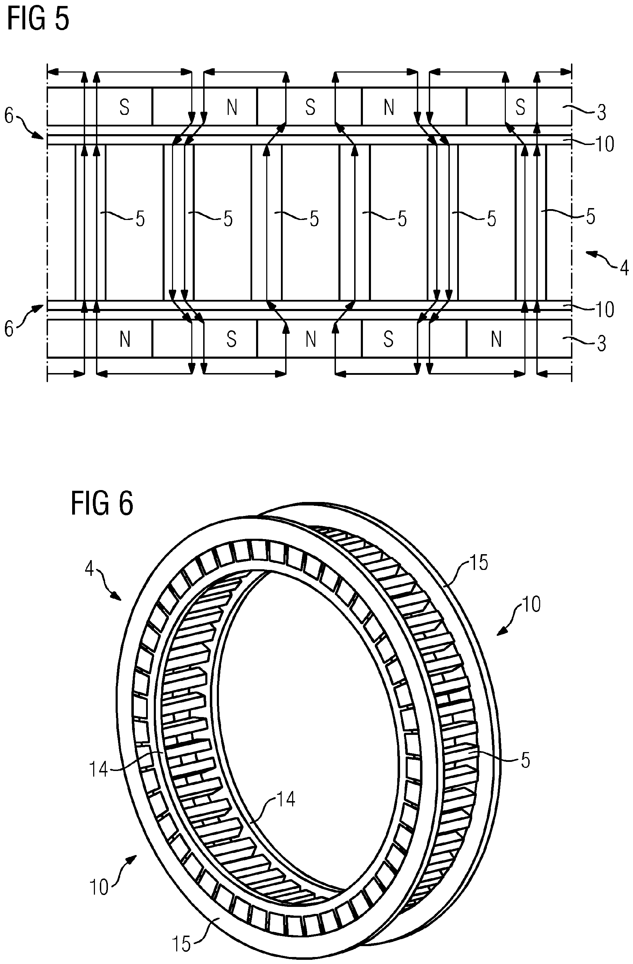

Bei der Ausgestaltung der Axialflussmaschine gemäß den FIG 1 und 2 sind die Ringstrukturen 10 in Axialrichtung zwischen den Statorzähnen 5 einerseits und den Rotoren 3 andererseits angeordnet. Dies ist in der perspektivischen Darstellung von FIG 4 erkennbar und besonders deutlich aus der abgerollten Darstellung von FIG 5 sichtbar. Bei dieser Ausgestaltung können die Statorzähne 5 und die Ringstrukturen 10 auf nahezu beliebige Weise miteinander verbunden sein. Beispielsweise können die Statorzähne 5 und die Ringstrukturen 10 formschlüssig miteinander verbunden sein. Zur Realisierung einer formschlüssigen Verbindung können die Ringstrukturen 10 beispielsweise Stifte aufweisen, welche sich in Axialrichtung erstrecken. Die Statorzähne 5 können in diesem Fall korrespondierende Ausnehmungen aufweisen, in welche die Stifte eingreifen. Alternativ oder zusätzlich können die Statorzähne 5 und die Ringstrukturen 10 stoffschlüssig miteinander verbunden sein, beispielsweise miteinander verklebt oder vergossen. Alternativ zu einer stoffschlüssigen Verbindung - gegebenenfalls aber alternativ oder zusätzlich zu einer formschlüssigen Verbindung - können die Statorzähne 5 und die Ringstrukturen 10 lösbar miteinander verbunden sein, beispielsweise miteinander verschraubt.

Bei der Fertigung des Stators 4 werden vorzugsweise die Statorzähne 5 zuerst mit der einen Ringstruktur 10 verbunden und erst danach mit der anderen Ringstruktur 10. Es ist möglich, dass das Statorwicklungssystem 7 aus Einzelwicklungen 8 besteht, so wie in FIG 2 dargestellt. In diesem Fall können beispielsweise die Statorzähne 5 vor dem Verbinden mit der einen Ringstruktur 10 bewickelt werden und danach mit der Ringstruktur 10 verbunden werden. Alternativ können die Statorzähne 5 vor dem Bewickeln mit der einen Ringstruktur 10 verbunden werden. Auch in diesem Fall kann das Statorwicklungssystem 7 aus den Einzelwicklungen 8 bestehen. Falls die Statorzähne 5 vor dem Bewickeln mit der einen Ringstruktur 10 verbunden werden, ist es jedoch ebenso möglich, dass das Statorwicklungssystem 7 als verteiltes Wicklungssystem - sei es als Einschichtwicklung, sei es als Zweischichtwicklung - ausgebildet ist.

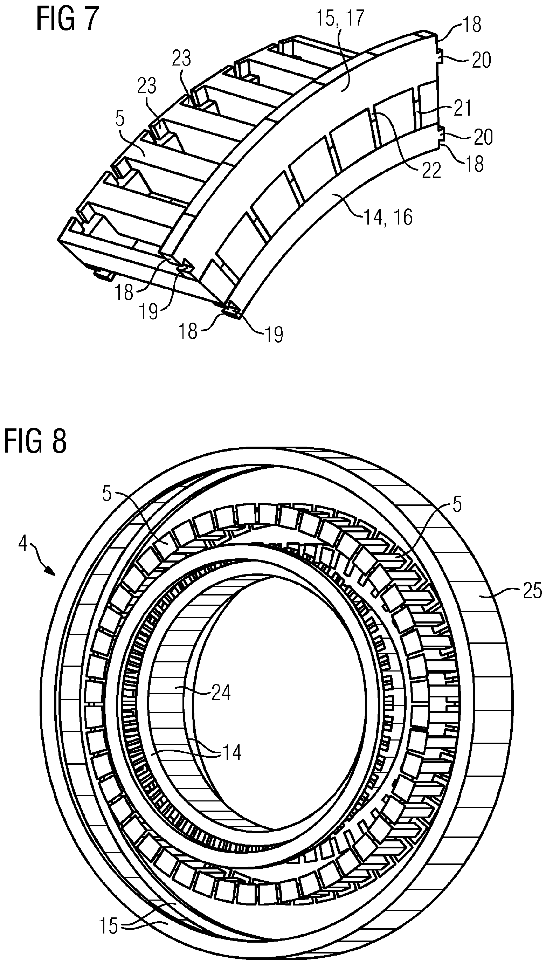

Die Ringstrukturen 10 sind gemäß den Darstellungen der FIG 1 und 4 in Radialrichtung (d.h. auf die Rotationsachse 2 zu bzw. von ihr weg gesehen) als durchgängige Strukturen ausgebildet, das heißt sie erstrecken sich in Radialrichtung ohne Unterbrechung einstückig von einem Minimalabstand von der Rotationsachse 2 bis zu einem Maximalabstand von der Rotationsachse 2. Es ist alternativ möglich, dass die Ringstrukturen 10 gemäß den FIG 6 und 7 in Radialrichtung gesehen aus einem radial inneren Innenring 14 und einem radial äußeren Außenring 15 bestehen.

Im Falle der Aufteilung der Ringstrukturen 10 in den Innenring 14 und den Außenring 15 können - wie bereits in Verbindung mit den FIG 1 und 4 erwähnt - die Ringstrukturen 10 mit den Statorzähnen 5 formschlüssig, stoffschlüssig oder lösbar verbunden sein. Insbesondere im Falle der Aufteilung der Ringstrukturen 10 in den Innenring 14 und den Außenring 15 ist alternativ jedoch ebenso möglich, dass die Statorzähne 5 und die Ringstrukturen 10 - zumindest teilweise - kraftschlüssig miteinander verbunden sind. Beispielsweise kann der Außenring 15 von radial außen auf die Statorzähne 5 aufgeschrumpft sein. In diesem Fall können - ebenso beispielsweise - die Statorzähne 5 von radial außen an den Innenring 14 angepresst sein.

In analoger Weise sind die Ringstrukturen 10 gemäß den Darstellungen der FIG 1 und 4 in Tangentialrichtung gesehen als geschlossene Ringe ausgebildet. Alternativ können die Ringstrukturen 10 gemäß den FIG 6 und 7 aus einer Anzahl von Ringsegmenten 16, 17 bestehen. Im Falle von Ringsegmenten 16, 17 erstrecken sich die Ringsegmente 16, 17 in Tangentialrichtung über mehrere Statorzähne 5. Meist sind die Ringsegmente 16, 17 jeweils mit vier bis zehn Statorzähnen 5 verbunden. Alternativ oder zusätzlich erstrecken sich die Ringsegmente 16, 17, bezogen auf die Rotationsachse 2, in der Regel über einen Umfangswinkel, der zwischen 10° und 60° liegt.

Die Aufteilung der Ringstrukturen 10 in die Ringsegmente 16, 17 ist in den FIG 6 und 7 in Verbindung mit der Aufteilung der Ringstrukturen 10 in den Innenring 14 und den Außenring 15 dargestellt. Die Aufteilung der Ringstrukturen 10 in die Ringsegmente 16, 17 ist jedoch ebenso ohne die Aufteilung der Ringstrukturen 10 in den Innenring 14 und den Außenring 15 realisierbar.

Im Falle der Aufteilung der Ringstrukturen 10 in die Ringsegmente 16, 17 können die Ringsegmente 16, 17 insbesondere formschlüssig miteinander verbunden sein. Beispielsweise können die Ringsegmente 16, 17 gemäß FIG 7 an ihren Stoßflächen 18 schwalbenschwanzartige Ausnehmungen 19 und korrespondierende schwalbenschwanzartige Vorsprünge 20 aufweisen, so dass die Ringsegmente 16, 17 formschlüssig miteinander zum Innenring 14 und zum Außenring 15 oder - im Falle einer radial durchgängigen Struktur - zur jeweiligen Ringstruktur 10 verbindbar sind.

Weiterhin können der Innenring 14 und/oder der Außenring 15 - bzw. die entsprechenden Ringsegmente 16, 17 - Stege 21, 22 aufweisen, die sich ausgehend vom Innenring 14 auf den Außenring 15 zu bzw. umgekehrt vom Außenring 15 auf dem Innenring 14 zu erstrecken. Wenn sowohl die Stege 21 als auch die Stege 22 vorhanden sind, können die Stege 21, 22 alternativ aneinander anstoßen oder voneinander beabstandet sein. Wenn nur die Stege 21 oder nur die Stege 22 vorhanden sind, können die vorhandenen Stege 21, 22 alternativ an den jeweils anderen Ring 15, 14 anstoßen oder von ihm beabstandet sein.

Die FIG 6 und 7 zeigen einige weitere Modifikationen des Stators 4 der Axialflussmaschine. Diese Modifikationen, die nachstehend näher erläutert werden, sind wahlweise alternativ oder zusätzlich zu den obenstehend erläuterten Ausgestaltungen realisierbar.

So ist in den FIG 6 und 7 beispielsweise eine Ausgestaltung dargestellt, bei welcher die Statorzähne 5 in den Endbereichen 6 Stege 23 aufweisen. Die Stege 23 erstrecken sich, ausgehend vom jeweiligen Statorzahn 5, in Tangentialrichtung auf die beiden bezüglich des jeweiligen Statorzahns 5 unmittelbar benachbarten Statorzähne 5 zu. Die Statorzähne 5 überdecken dadurch in den Endbereichen 6 in Tangentialrichtung einen größeren Winkel als zwischen den Endbereichen 6.

Weiterhin können die Statorzähne 5, wie insbesondere aus FIG 7 ersichtlich ist, in Axialrichtung gesehen über die Ringstrukturen 10 hinausragen. Diese Ausgestaltung ist insbesondere dann von Vorteil, wenn die Stege 23 vorhanden sind. In diesem Fall können insbesondere die Stege 23 der Statorzähne 5 axial außerhalb der Ringstrukturen 10 angeordnet sein. Ein Hinausragen über die Ringstrukturen 10 ist jedoch auch dann möglich, wenn die Stege 23 nicht vorhanden sind.

Wenn die Statorzähne 5 in Axialrichtung über die Ringstrukturen 10 hinausragen, sind die Ringstrukturen 10 vorzugsweise entsprechend der Darstellung der FIG 6 und 7 in den Innenring 14 und den Außenring 15 unterteilt. Zwingend ist dies jedoch nicht erforderlich.

Alternativ ist es ebenso möglich, dass die Statorzähne 5 zwar zwischen die Ringstrukturen 10 hineinragen, die Ringstrukturen 10 aber nicht überragen. In diesem Fall existiert ein axial innerer Bereich des Stators 4, an den sich in Richtung auf die beiden Rotoren 3 zu jeweils ein axial mittlerer Bereich des Stators 4 und daran jeweils ein axial äußerer Bereich des Stators 4 anschließen. Im axial inneren Bereich des Stators 4 befinden sich ausschließlich die Statorzähne 5 und das Statorwicklungssystem 7, aber keine Bestandteile der Ringstrukturen 10. In den axial mittleren Bereichen des Stators 4 befinden sich die Endbereiche 6 der Statorzähne 5 und axial innere Bereiche der Ringstrukturen 10. In den axial äußeren Bereichen des Stators 4 befinden sich ausschließlich axial äußere Bereiche der Ringstrukturen 10, aber keine Bestandteile der Statorzähne 5.

Wenn die Statorzähne 5 in Axialrichtung zwischen die Ringstrukturen 10 hineinragen, sind die Ringstrukturen 10 vorzugsweise - wie zuvor - in den Innenring 14 und den Außenring 15 unterteilt. Zwingend ist dies jedoch nicht erforderlich.

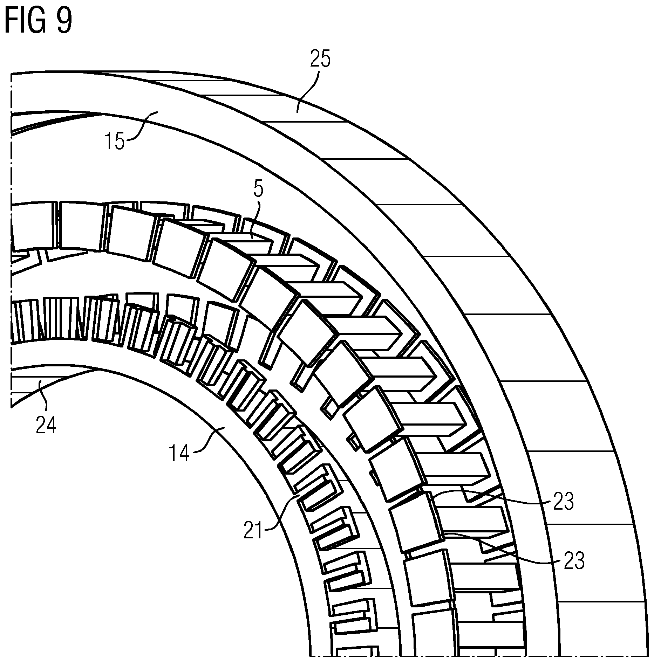

Die FIG 8 und 9 zeigen eine weitere mögliche Modifikation des Stators 4. Gemäß den FIG 8 und 9 sind die Ringstrukturen 10 in die Innenringe 14 und die Außenringe 15 unterteilt. Die Innenringe 14 sind über eine innere Verbindungsstruktur 24 miteinander verbunden. Die innere Verbindungsstruktur 24 kann alternativ punktuell oder geschlossen sein. Eine punktuelle Verbindungsstruktur 24 könnte beispielsweise durch eine Gitterstruktur, durch eine Fachwerkstruktur oder auch durch einfache, sich rein axial erstreckende Stäbe realisiert sein. In analoger Weise sind die Außenringe 15 über eine äußere Verbindungsstruktur 25 miteinander verbunden. Die äußere Verbindungsstruktur 25 kann - analog zur inneren Verbindungsstruktur 24 - alternativ punktuell oder geschlossen sein. In dem Fall, dass beide Verbindungsstrukturen 24, 25 geschlossen sind, kann beispielsweise in dem von den beiden Verbindungsstrukturen 24, 25 umschlossenen Raum ein eigenständiger Kühlmittelkreislauf realisiert werden.

Eine durch die beiden Innenringe 14 und die innere Verbindungsstruktur 24 gebildete innere Einheit kann einstückig ausgebildet sein. Alternativ kann sie in Tangentialrichtung segmentiert sein. Gleiches gilt für eine durch die beiden Außenringe 15 und die äußere Verbindungsstruktur 25 gebildete äußere Einheit.

Gemäß den FIG 8 und 9 weisen die Innenringe 14 die Stege 21 auf. Mittels der Stege 21 werden die Statorzähne 5 gehalten und fixiert, vorzugsweise mittels Formschluss. Falls die Statorzähne 5 ihrerseits ihre Stege 23 aufweisen, sind die Stege 21 - siehe insbesondere FIG 9 - vorzugsweise entsprechend konturiert. Alternativ zum Vorhandensein der Stege 21 können die Stege 22 vorhanden sein. In diesem Fall gelten die oben stehenden Aussagen in analoger Weise anstelle der Stege 21 für die Stege 22. Es ist sogar möglich, dass sowohl die Stege 21 als auch die Stege 22 vorhanden sind. In diesem Fall sind jedoch die innere Einheit und/oder die äußere Einheit vorzugsweise segmentiert.

Die Verbindung der Ringstrukturen 10 und der Statorzähne 5 erfolgt bei der Ausgestaltung gemäß den FIG 8 und 9 vorzugsweise durch Kraftschluss, beispielsweise durch Aufschrumpfen. Prinzipiell sind jedoch auch andere Verbindungsarten möglich.

Die erfindungsgemäße Axialflussmaschine wird vorzugsweise als Traktionsantrieb eingesetzt, beispielsweise bei einem Schienenfahrzeug. Prinzipiell ist die erfindungsgemäße Axialflussmaschine jedoch universell einsetzbar, beispielsweise bei Straßen-, Wasser- oder Luftfahrzeugen oder auch stationär.

Die erfindungsgemäße Axialflussmaschine weist viele Vorteile auf. Insbesondere ist eine einfache, schrittweise Fertigung der Axialflussmaschine möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Axialflussmaschine,
- wobei die Axialflussmaschine eine um eine Rotationsachse (2) rotierbare Rotorwelle (1) aufweist, auf der zwei Rotoren (3) angeordnet sind, die in Richtung der Rotationsachse (2) gesehen voneinander beabstandet sind,
- wobei in Richtung der Rotationsachse (2) gesehen zwischen den beiden Rotoren (3) ein Stator (4) angeordnet ist,
- wobei der Stator (4) eine Anzahl von Statorzähnen (5) aufweist, die sich jeweils in Richtung der Rotationsachse (2) zwischen zwei Endbereichen (6) erstrecken,
- wobei die Statorzähne (5) in einem radialen Abstand (r) von der Rotationsachse (2) gleichmäßig um die Rotationsachse (2) herum verteilt angeordnet sind und ein Statorwicklungssystem (7) tragen,
- wobei die Statorzähne (5) in den Endbereichen (6) über eine jeweilige Ringstruktur (10) miteinander und mit einem den Stator (4) radial außen umgebenden Gehäuse (11) verbunden sind,
**dadurch gekennzeichnet, dass**
- die Ringstrukturen (10) radial zur Rotationsachse (2) gesehen aus einem radial inneren Innenring (14) und einem radial äußeren Außenring (15) bestehen, wobei die Ringstrukturen (10) in den Innenring (14) und den Außenring (15) unterteilt sind.

2. Axialflussmaschine nach Anspruch 1, **dadurch gekennzeichnet, dass** das Statorwicklungssystem (7) direkt auf die Statorzähne (5) gewickelt ist.

3. Axialflussmaschine nach Anspruch 2, **dadurch gekennzeichnet, dass** das Statorwicklungssystem (7) aus Einzelwicklungen (8) besteht, die jeweils auf einen einzelnen Statorzahn (5) gewickelt sind, oder als verteiltes Wicklungssystem ausgebildet ist.

4. Axialflussmaschine nach Anspruch 1, 2 oder 3, **dadurch gekennzeichnet, dass** die Ringstrukturen (10) aus einem elektrisch nicht leitenden und/oder magnetisch nicht leitenden Material bestehen.

5. Axialflussmaschine nach Anspruch 4, **dadurch gekennzeichnet, dass** die Ringstrukturen (10) aus einem faserverstärkten Kunststoff bestehen, insbesondere aus CFK oder GFK.

6. Axialflussmaschine nach einem der obigen Ansprüche, **dadurch gekennzeichnet, dass** die Ringstrukturen (10) in Sandwichbauweise ausgebildet sind.

7. Axialflussmaschine nach einem der obigen Ansprüche, **dadurch gekennzeichnet, dass** die Ringstrukturen (10) tangential um die Rotationsachse (2) herum gesehen als geschlossene Ringe ausgebildet sind oder aus einer Anzahl von Ringsegmenten (16, 17) bestehen.

8. Axialflussmaschine nach einem der obigen Ansprüche, **dadurch gekennzeichnet, dass** in Richtung der Rotationsachse (2) gesehen die Ringstrukturen (10) zwischen den Statorzähnen (5) einerseits und den Rotoren (3) andererseits angeordnet sind oder die Statorzähne (5) zwischen die Ringstrukturen (10) hineinragen oder die Statorzähne (5) über die Ringstrukturen (10) hinausragen.

9. Axialflussmaschine nach einem der obigen Ansprüche, **da-d urch gekennzeichnet**, dass die Statorzähne (5) in den Endbereichen (6) Stege (23) aufweisen, so dass die Statorzähne (5) in den Endbereichen (6) um die Rotationsachse (2) herum gesehen einen größeren Winkel überdecken als zwischen den Endbereichen (6).

10. Axialflussmaschine nach einem der obigen Ansprüche, **da-durch gekennzeichnet**, dass die Statorzähne (5) und die Ringstrukturen (10) formschlüssig, kraftschlüssig, stoffschlüssig oder lösbar miteinander verbunden sind.

11. Axialflussmaschine nach einem der obigen Ansprüche, **dadurch gekennzeichnet, dass** der Innenring (14) Stege (21) oder der Außenring (15) Stege (22) aufweist, die sich jeweils ausgehend vom Innenring (14) auf den Außenring (15) zu oder umgekehrt vom Außenring (15) auf dem Innenring (14) zu erstrecken.

12. Axialflussmaschine nach Anspruch 11, **dadurch gekennzeichnet, dass** die an einem der Ringe (14, 15) vorhandenen Stege (21, 22) an den jeweils anderen Ring (15, 14) anstoßen oder von ihm beabstandet sind.

13. Axialflussmaschine nach einem der Ansprüche 1 bis 10, **dadurch gekennzeichnet, dass** der Innenring (14) Stege (21) und der Außenring (15) Stege (22) aufweist, die sich jeweils ausgehend vom Innenring (14) auf den Außenring (15) zu oder umgekehrt vom Außenring (15) auf dem Innenring (14) zu erstrecken.

14. Axialflussmaschine nach Anspruch 13, **dadurch gekennzeichnet, dass** die Stege (21, 22) aneinander anstoßen oder voneinander beabstandet sind.

## Claims

1. Electrical axial flux machine,
- wherein the axial flux machine has a rotor shaft (1) which is rotatable about an axis of rotation (2) and on which two rotors (3) are arranged, said rotors being spaced apart from one another when viewed in the direction of the axis of rotation (2),
- wherein a stator (4) is arranged between the two rotors (3) when viewed in the direction of the axis of rotation (2),
- wherein the stator (4) has a number of stator teeth (5), which each extend in the direction of the axis of rotation (2) between two end regions (6),
- wherein the stator teeth (5) are arranged distributed uniformly around the axis of rotation (2) at a radial spacing (r) from the axis of rotation (2) and bear a stator winding system (7),
- wherein the stator teeth (5) are connected in the end regions (6) via a respective ring structure (10) to one another and to a housing (11) surrounding the stator (4) radially on the outside,
**characterized in that**
- the ring structures (10) when viewed radially with respect to the axis of rotation (2) consist of a radially inner internal ring (14) and a radially outer external ring (15), wherein the ring structures (10) are divided into the internal ring (14) and the external ring (15).

2. Axial flux machine according to Claim 1, **characterized in that** the stator winding system (7) is wound directly onto the stator teeth (5).

3. Axial flux machine according to Claim 2, **characterized in that** the stator winding system (7) consists of individual windings (8), which are each wound onto an individual stator tooth (5), or is in the form of a distributed winding system.

4. Axial flux machine according to Claim 1, 2 or 3, **characterized in that** the ring structures (10) consist of an electrically nonconductive and/or magnetically nonconductive material.

5. Axial flux machine according to Claim 4, **characterized in that** the ring structures (10) consist of a fiber-reinforced plastic, in particular of CFRP or GFRP.

6. Axial flux machine according to one of the above claims, **characterized in that** the ring structures (10) have a sandwich design.

7. Axial flux machine according to one of the above claims, **characterized in that** the ring structures (10) are formed as closed rings when viewed tangentially around the axis of rotation (2) or consist of a number of ring segments (16, 17).

8. Axial flux machine according to one of the above claims, **characterized in that**, when viewed in the direction of the axis of rotation (2), the ring structures (10) are arranged between the stator teeth (5), on one side, and the rotors (3), on the other side, or the stator teeth (5) protrude inwards between the ring structures (10) or the stator teeth (5) protrude beyond the ring structures (10).

9. Axial flux machine according to one of the above claims, **characterized in that** the stator teeth (5) have webs (23) in the end regions (6), with the result that the stator teeth (5) in the end regions (6) cover a greater angle, when viewed around the axis of rotation (2), than between the end regions (6).

10. Axial flux machine according to one of the above claims, **characterized in that** the stator teeth (5) and the ring structures (10) are connected to one another in a form-fitting manner, force-fitting manner, cohesively or detachably.

11. Axial flux machine according to one of the above claims, **characterized in that** the internal ring (14) has webs (21) or the external ring (15) has webs (22), which extend respectively starting from the internal ring (14) towards the external ring (15) or conversely from the external ring (15) towards the internal ring (14).

12. Axial flux machine according to Claim 11, **characterized in that** the webs (21, 22) provided on one of the rings (14, 15) abut the respective other ring (15, 14) or are spaced apart therefrom.

13. Axial flux machine according to one of Claims 1 to 10, **characterized in that** the internal ring (14) has webs (21) or the external ring (15) has webs (22), which extend respectively starting from the internal ring (14) towards the external ring (15) or conversely from the external ring (15) towards the internal ring (14).

14. Axial flux machine according to Claim 13, **characterized in that** the webs (21, 22) abut one another or are spaced apart from one another.

## Revendications

1. Machine électrique à flux axial,
- dans laquelle la machine à flux axial présente un arbre de rotor (1), pouvant tourner autour d'un axe de rotation (2), sur lequel sont agencés deux rotors (1) qui sont espacés l'un par rapport à l'autre dans la direction de l'axe de rotation (2),
- dans laquelle un stator (4) est agencé entre les deux rotors (3) par rapport à la direction de l'axe de rotation (2),
- dans laquelle le stator (4) présente une pluralité de dents de stator (5) qui s'étendent entre deux régions d'extrémité (6) respectivement dans la direction de l'axe de rotation (2),
- dans laquelle les dents de stator (5) sont agencées de manière régulièrement répartie autour de l'axe de rotation (2) avec un espacement radial (r) par rapport à l'axe de rotation (2) et supportent un système d'enroulement statorique (7),
- dans laquelle les dents de stator (5) sont reliées les unes aux autres dans les secteurs d'extrémité (6) par l'intermédiaire d'une structure annulaire (10) respective et sont reliées à un boîtier (11) entourant le stator (4) radialement par l'extérieur,
**caractérisée en ce que**
- les structures annulaires (10) sont constituées d'un anneau intérieur radial (14) et d'un anneau extérieur radial (15), si on les considère de manière radiale par rapport à l'axe de rotation (2), les structures annulaires (10) étant subdivisées pour former l'anneau intérieur (14) et l'anneau extérieur (15).

2. Machine à flux axial selon la revendication 1, **caractérisée en ce que** le système d'enroulement statorique (7) est enroulé directement sur les dents de stator (5).

3. Machine à flux axial selon la revendication 2, **caractérisée en ce que** le système d'enroulement statorique (7) est constitué de spires individuelles (8) qui sont enroulées respectivement sur une dent de stator (5) individuelle, ou est réalisé à la manière d'un système d'enroulement distribué.

4. Machine à flux axial selon l'une quelconque des revendications 1, 2 ou 3, **caractérisée en ce que** les structures annulaires (10) sont constituées d'un matériau électriquement non conducteur et/ou magnétiquement non conducteur.

5. Machine à flux axial selon la revendication 4, **caractérisée en ce que** les structures annulaires (10) sont constituées d'une matière plastique renforcée par des fibres, en particulier une matière plastique renforcée par des fibres de carbone ou une matière plastique renforcée par des fibres de verre.

6. Machine à flux axial selon l'une quelconque des revendications précédentes, **caractérisée en ce que** les structures annulaires (10) sont réalisées selon un agencement en sandwich.

7. Machine à flux axial selon l'une quelconque des revendications précédentes, **caractérisée en ce que** les structures annulaires (10) sont réalisées sous forme d'anneaux fermés, si on les considère de manière tangentielle autour de l'axe de rotation (2) ou sont constituées d'une pluralité de segments annulaires (16, 17).

8. Machine à flux axial selon l'une quelconque des revendications précédentes, **caractérisée en ce que** les structures annulaires (10) sont agencées d'une part entre les dents de stator (5) et d'autre part entre les rotors (3), par rapport à la direction de l'axe de rotation (2), ou les dents de stator (5) font saillie vers l'intérieur entre les structures annulaires (10), ou les dents de stator (5) font saillie vers l'extérieur au-delà des structures annulaires (10).

9. Machine à flux axial selon l'une quelconque des revendications précédentes, **caractérisée en ce que** les dents de stator (5) présentent des talons (23) dans les secteurs d'extrémité (6), de sorte que les dents de stator (5) couvrent dans les secteurs d'extrémité (6) un angle supérieur à celui qu'elles couvrent entre les secteurs d'extrémité (6), lorsqu'on les considère autour de l'axe de rotation (2).

10. Machine à flux axial selon l'une quelconque des revendications précédentes, **caractérisée en ce que** les dents de stator (5) et les structures annulaires (10) sont reliées les unes aux autres par complémentarité de forme, par complémentarité de force, par complémentarité de matière, ou sont amovibles.

11. Machine à flux axial selon l'une quelconque des revendications précédentes, **caractérisée en ce que** l'anneau intérieur (14) présente des talons (21) ou l'anneau extérieur (15) présente des talons (22), qui s'étendent respectivement de l'anneau intérieur (14) vers l'anneau extérieur (15) ou inversement de l'anneau extérieur (15) vers l'anneau intérieur (14).

12. Machine à flux axial selon la revendication 11, **caractérisée en ce que** les talons (21, 22) présents sur l'un des anneaux (14, 15) butent contre l'autre anneau (15, 14) respectif ou sont espacés par rapport à celui-ci.

13. Machine à flux axial selon l'une quelconque des revendications 1 à 10, **caractérisée en ce que** l'anneau intérieur (14) présente des talons (21) et l'anneau extérieur (15) présente des talons (22), qui s'étendent respectivement à partir de l'anneau intérieur (14) vers l'anneau extérieur (15) ou inversement de l'anneau extérieur (15) vers l'anneau intérieur (14).

14. Machine à flux axial selon la revendication 13, **caractérisée en ce que** les talons (21, 22) butent les uns contre les autres ou sont espacés les uns par rapport aux autres.
